# EUROPEAN PATENT APPLICATION

(11) **EP 2 806 382 A1**
(43) Date of publication of application: **26.11.2014**
(21) Application number: 14169519.7
(22) Date of filing: 22.05.2014
(51) Int. Cl.: G06Q 10/06

(54) **A method and apparatus for searching a system with multiple discrete data stores**

(30) Priority: 23.05.2013 GB 201309320
(71) Applicant: Basis Technologies International Limited, Richmond, Surrey TW9 1BN (GB)
(72) Inventor: Oliver, Craig, Richmond, Surrey TW9 1BN (GB)
(74) Representative: Blake, Stephen James

(57) **Abstract**

The present invention relates to searching a system including multiple stores of data which are discrete from each other. The method includes: receiving a search parameter including an identifier, for the identifier, retrieving an other identifier related to the identifier, identifying one or more data stores associated with the identifier and the other identifier, and for each identified data store searching the data store using the identifier or the other identifier associated with the data store.

## Description

### Technical Field

The present invention relates to a multi-database system and an apparatus and method of querying the databases within such a system. The method is of particular use for querying multiple discrete data stores in real time.

### Background

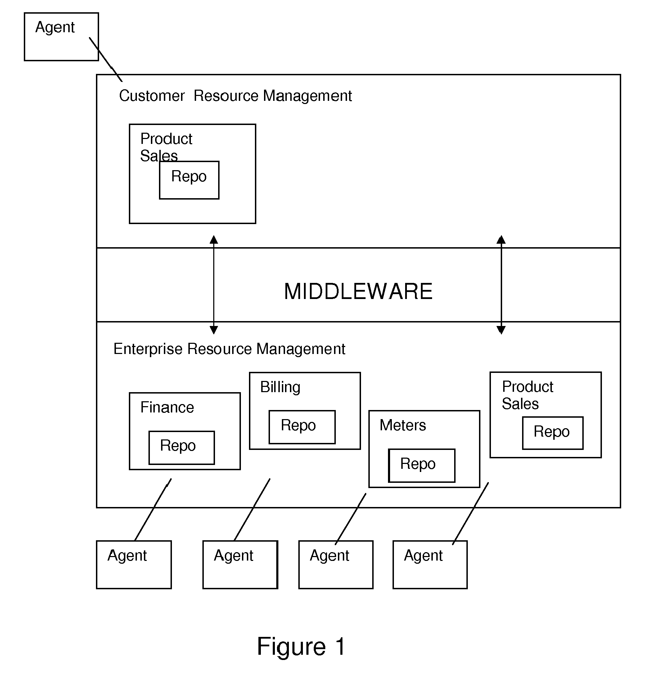

Enterprise systems are generally made up of a number of silos containing customer data. Each silo is constructed independently and are generally for a different purpose. For example, in a utilities company such as an electricity supplier as shown in Figure 1 there may be a silo for finance, a silo for billing, a silo for sales, a silo for meters etc... In order to optimise the silo for their purpose often each silo has a differing data structure, includes different customer data and employs different methodologies to other silos.

Within each silo is a datastore for storing information relating to a process and a repository which includes a plurality of outstanding data items. The data items relate to a problems, queries, task, exception, issue or process for an object relating to that silo. Each problem, exception, issue or process (such as acquiring a new customer, a customer leaving the company, a customer making a complaint, a billing error etc...) affecting a particular customer (or related object) will result in the creation of a data item in the repository. Generally, within each silo there will be a multitude of outstanding data items requiring attention within the repository.

When a customer contacts an enterprise to take an action, for example, make a complaint they are connected to an enterprise agent in a call centre. The call centre agent, upon hearing the complaint or reason for contact, will attempt to resolve the complaint by looking at the different repositories for outstanding data items relating to that customer. If the call centre agent cannot solve the complaint within a predetermined time frame then they will end the call with the customer and pass the complaint to a back office agent who will continue to work to resolve the complaint. The back office agent repeats the same process by looking at the different repositories for any outstanding data items relating to the customer in order to try to solve the complaint. The same actions may take place in response to any contact by a customer, for example, for a query, or a request for an action by the enterprise.

This process of identifying entries relating to the customer is repetitive as the same task has to be undertaken in many different silos until the correct repository is found and the issue causing the complaint can be resolved. Additionally, even when the correct repository is found the process then needs to be repeated for the next item allocated to the agent. The repetitive nature of the task increases the likelihood of human error.

Furthermore, depending on the experience of the agent, the time taken to identify the repository from the contents of the customer's contact with the enterprise may vary. Generally, the more inexperienced the agent the more time they will take to identify the repository as they have not gained the requisite knowledge required to efficiently identify the correct repository from any information provided by the customer. Additionally, as the system is set up as a number of separate repositories which do not communicate with each other it is common that an agent is not able to access all the silos within the enterprise system. Finally, even if the agent is able to identify the correct repository the data may be structured within the repository in such a way that a human is not able to identify the necessary data. This means that even if an agent is experienced they may not access the required repository or be able to identify the cause of the issue and thereby address the problem.

Thus, this current method of solving issues is inefficient and highly dependent upon the agents involved in each complaint.

### Summary

In accordance with an aspect of the present invention there is provided a method including: receiving a search parameter including an identifier, for the identifier, retrieving an other identifier related to the identifier, identifying one or more data stores associated with the identifier and the other identifier and, for each identified data store, searching the data store using the identifier or the other identifier associated with the data store. By using identifiers to selectively query datastores associated with the identifiers rather than using a customer identifier to query all datastores the search can be more readily customised for each silo. This increases the speed that the databases can be queried. Additionally, it allows a person to resolve issues in real time as it means that where the problem is known to relate to a particular object such as a meter reading or a bill, these can be readily identified.

The identifier and/or other identifier may be an object identifier.

The method further comprises retrieving data items from the data store, the retrieved data items being associated with the identifier or other identifier used to search the data store. Optionally, the retrieved data items may be collated.

The data item may relate to one of a problem, a complaint, a query, a task, an exception, an issue, a process block or a process for an object.

Optionally, the data item may include a time stamp and information identifying the type of the data item and the method including performing pattern recognition on any retrieved data items.

The identifier may be flagged if a pattern recognised in the data items matches a predetermined pattern.

Optionally, one or more data items have context information associated with at least a part of the data item or included in the data item. The context information may be a priority classification or creation date or any other suitable type of information. The context information may comprise a hyperlink or a telephone number.

The method may be implemented in an SAP (TM) system.

According to another aspect of the present invention there is provided a search device. The search device includes an input to receive a search parameter including an identifier, a retrieving means configured to, for the identifier, retrieve an other identifier related to the identifier, identifying means configured to identify one or more data stores associated with the identifier and the other identifier and searching means configured to, for each identified data store, search the data store using the identifier or the other identifier associated with the data store.

The searching means may also retrieve data items from the data store, the retrieved data items being associated with the identifier or other identifier used to search the data store. The retrieved data items may be collated by collating means in the search device.

Each data item may include a time stamp and information identifying the type of the data item and the device further includes pattern recognition means configured to perform pattern recognition on any retrieved data items.

The pattern recognition means may also flag the identifier if a pattern recognised in the data items matches a predetermined pattern.

The search device may be implemented in an SAP (TM) system with one or more of the one or more data stores being a silo in the SAP (TM) system.

According to a further aspect of the present invention there is provided a computer program embodied on a computer readable medium which, when executed, causes a device to perform the method of an aspect of the present invention.

### Brief description of the drawings

Figure 1 illustrates a prior art enterprise system;
Figure 2 illustrates an enterprise system in accordance with the present invention; and

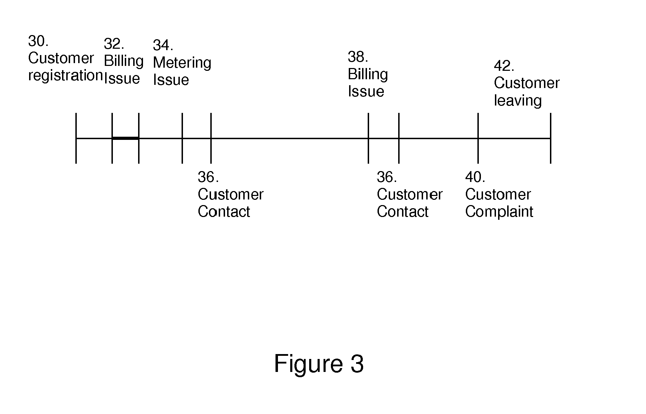

Figure 3 illustrates an example customer lifecycle with an enterprise system.

### Detailed description

As discussed above an enterprise system has a plurality of discrete silos each including at least a datastore and a repository. A customer of the enterprise (as opposed to an agent of the enterprise) is provided with a unique customer identifier such as a customer reference or account number and has entries within the silos as appropriate. In addition to the unique customer identifier the customer account will have a number of unique object identifiers associated with them. For example, if the enterprise is an electricity provider then the customer may have associated with them a meter identifier identifying the unique physical device in their accommodation, a contract identifier representing the supply contract the customer has with the enterprise.

The object identifiers may not have entries in all of the datastores. For example, the meter identifier may be included in the billing silo as its reading is used to generate the bill and a meter silo but not in the finance silo or the sales silo. In contrast the contract identifier specifying the contract the customer has with the enterprise may be included in the billing, finance and sales silos but not the meter silo.

The enterprise system of the present invention is connected to a search device which is configured to communicate with one or more of the silos within the enterprise system.

In the present arrangement when a customer has a query or complaint they contact the enterprise and are connected to an enterprise agent, generally a call centre agent. When the enterprise agent receives the contact from the customer they enter the customer's identifier into the enterprise system.

The enterprise system passes the customer identifier to the search device. The search device, upon receiving the customer identifier, retrieves any object identifiers such as the meter identifier and the contract identifier associated with the customer identifier.

The search device then queries the repositories for entries relating to the customer identifier or any of the retrieved object identifiers. Any entry in a repository relating to the customer identifier or one of the object identifiers is returned to the search device which can then return the results to the agent. The results may be returned to the agent either as they are retrieved by the search device or the search device may collate the results and return a single set of results to the agent. The agent can then rectify any issues highlighted by the contents of the repositories or, if they are unable to rectify the problem, contact the appropriate person to resolve the problem.

Preferably, the search device selectively queries repositories using only those object identifiers associated with the repository's silo. This may be achieved using any suitable means. For example, some repositories may be keyed to specific object identifiers while others are generic. The search device is constructed to determine which repositories require specific keys and which are generic. For example, the search may determine which repositories require specific keys by querying a database storing, for each repository, identifiers associated with the repository. Alternatively, the search device may interrogate the data hierarchy to retrieve object identifiers associated with each repository. The search device will then interrogate the repository using the appropriate key(s).

Optionally, the search device includes a database which associates each object type with one or more sets of context information. For example, the meter object's associated context information may include a number of registers, the meter's installation date or the meter's location. Optionally, the context information may also include any relevant contact information, for example, in the instance of a meter object, the context information may include contact details for the servicing department or the billing department enabling an agent to easily contact another agent to resolve any queries/tasks/complaints raised by the customer.

In this way the search device may return to the agent context information associated with the object identifier for any objects retrieved during the search. This allows the agent to readily rectify the problem or, if they do not have adequate permissions to rectify the problem to contact the relevant department. Context information may be a hyperlink, a telephone number, an action to be taken etc... Context information may also be associated with the task stored in the repository. For example, it may include the priority, creation date, assignment details, due date and any steps or actions required to resolve the entry in the repository.

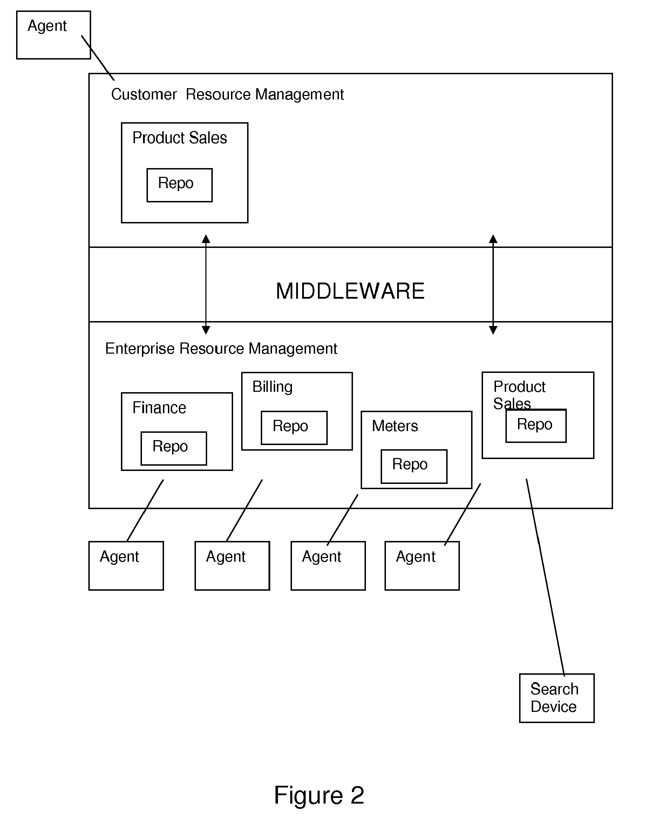

The present invention may also be used to search for patterns in the data relating to customers. In each customer lifecycle from the customer registering to use the services of the enterprise to leaving the enterprise there will be a number of events. One example of a customer lifecycle from registration of the customer 30 to the customer leaving the enterprise 42 is illustrated in Figure 2.

The lifecycle in Figure 2 shows 6 events relating to the customer and as can be seen there are 2 billing issues that occurred, the first one 32 taking a period of time to resolve, one metering issue 34 and 3 points of contact, one of which to initiate contact with the enterprise, another of which to leave the enterprise and a complaint to the enterprise.

Using the method described above the enterprise system can be searched for objects relating to issues identified to be common between customers who have left the enterprise. If this search is carried out over many clients who have left the service then there may similar contact and/or issue patterns between the clients.

Once a pattern has been recognised in customers who are leaving the enterprise system may be searched for objects which relate to the events in that pattern. The result of a search for the objects can be grouped according to the customer identifier in order to determine whether events are occurring for a particular customer in a pattern that is common to that identified in customers leaving the system. In this way the enterprise can identify and proactively contact clients who are liable to leave the enterprise before they do so.

The object identifiers associated with the customer identifier may be stored using any suitable means. For example, the search device may be provided with a database storing for each customer identifier associated object identifiers. Alternatively or additionally, the search device may interrogate the data hierarchy to retrieve object identifiers associated with the customer identifier.

As will be understood by one skilled in the art can have multiple silos within each repository.

Although the present invention is described with reference to an enterprise system which includes silos and data relating to customers the skilled person will understand that the principles described may be applied to any system having data distributed over multiple discrete stores of data. Examples of enterprises where it may be implemented include banks, telecommunications companies, insurance companies, councils, retail.

The data may be stored in any form of database.

## Claims

1. A method comprising:
receiving a search parameter including an identifier;
for the identifier, retrieving an other identifier related to the identifier;
identifying one or more data stores associated with the identifier and the other identifier; and
for each identified data store, searching the data store using the identifier or
the other identifier associated with the data store.

2. A method as claimed in claim 1 wherein the identifier and/or other identifier comprises an object identifier.

3. A method as claimed in claim 1 or claim 2 wherein the method further comprises retrieving data items from the data store, the retrieved data items being associated with the identifier or other identifier used to search the data store.

4. A method as claimed in claim 3 wherein the method further comprises the step of collating the data items.

5. A method as claimed in claim 3 or claim 4 wherein the data item comprises one of a problem, a complaint, a query, a task, an exception, an issue, a process block or a process for an object.

6. A method as claimed in any one of claims 3 to 5 wherein each data item includes a time stamp and information identifying the type of the data item and the method including performing pattern recognition on any retrieved data items.

7. A method as claimed in claim 6 wherein further comprising flagging the identifier if a pattern recognised in the data items matches a predetermined pattern.

8. A method as claimed in any one of claims 3 to 7 wherein one or more data items have context information associated with at least a part of the data item or included in the data item, and optionally the context information comprises a hyperlink or a telephone number.

9. A method as claimed in any preceding claim implemented in an SAP system.

10. A search device comprising:
an input to receive a search parameter including an identifier;
a retrieving means configured to, for the identifier, retrieve an other identifier related to the identifier;
identifying means configured to identify one or more data stores associated with the identifier and the other identifier; and
searching means configured to, for each identified data store, search the data store using the identifier or the other identifier associated with the data store.

11. A search device as claimed in claim 10 wherein the searching means is further configured to retrieve data items from the data store, the retrieved data items being associated with the identifier or other identifier used to search the data store.

12. A search device as claimed in claim 10 or claim 11 further comprising collating means configured to collate the data items.

13. A search device as claimed in any one of claims 10 to 12 wherein each data item includes a time stamp and information identifying the type of the data item and the device further includes pattern recognition means configured to perform pattern recognition on any retrieved data items, and optionally wherein the pattern recognition means is further configured to flag the identifier if a pattern recognised in the data items matches a predetermined pattern.

14. A search device as claimed in any one of claims 10 to 13 wherein the search device is implemented in SAP (TM) system with one or more of the one or more data stores being a silo in the SAP (TM) system.

15. A computer program embodied on a computer readable medium which, when executed, causes a device to perform the steps of any one of claims 1 to 9.
